# EUROPÄISCHE PATENTSCHRIFT

(11) **EP 3 254 136 B1**
(45) Veröffentlichungstag und Bekanntmachung des Hinweises auf die Patenterteilung: **05.12.2018**
(21) Anmeldenummer: 16701954.6
(22) Anmeldetag: 29.01.2016
(51) Int. Cl.: G01S 15/93, G01S 15/89, G01S 7/52, G01S 7/53

(54) **VERARBEITUNG VON SENSORMESSUNGEN EINES FAHRZEUGUMFELDES BEI GERINGER QUERAUFLÖSUNG**
PROCESSING SENSOR MEASUREMENTS OF A VEHICLE ENVIRONMENT WITH LOW TRANSVERSE RESOLUTION
TRAITEMENT DE MESURES DE DÉTECTION DE L'ENVIRONNEMENT D'UN VÉHICULE À MOINDRE RÉSOLUTION TRANSVERSALE

(30) Priorität: 02.02.2015 DE 102015201706
(43) Veröffentlichungstag der Anmeldung: 13.12.2017
(73) Patentinhaber: Bayerische Motoren Werke Aktiengesellschaft, 80809 München (DE)
(72) Erfinder: WALESSA, Marc, 80999 München (DE)
(86) Internationale Anmeldenummer: PCT/EP2016/051893
(87) Internationale Veröffentlichungsnummer: WO 2016/124490

(56) Entgegenhaltungen:
- EP-A1- 1 672 390
- EP-A1- 1 731 922
- WILKES D ET AL: "Multi-transducer sonar interpretation", PROCEEDINGS OF THE INTERNATIONAL CONFERENCE ON ROBOTICS AND AUTOMATION ATLANTA, MAY 2 - 6, 1993; [PROCEEDINGS OF THE INTERNATIONAL CONFERENCE ON ROBOTICS AND AUTOMATION], LOS ALAMITOS, IEEE COMP. SOC. PRESS, US, Bd. CONF. 10, 2. Mai 1993 (1993-05-02), Seiten 392-397, XP010095235, DOI: 10.1109/ROBOT.1993.292176 ISBN: 978-0-8186-3450-5

## Beschreibung

Die Erfindung betrifft ein Verfahren zum Bereitstellen einer Umfeldkarte für ein Fahrzeug sowie eine entsprechende elektronische Recheneinrichtung.

Heutzutage ist es bekannt, das Umfeld eines Fahrzeuges mithilfe von Sensoren wie Kameras, Lidar, Radar oder Ultraschall zu erfassen. Die Messungen werden häufig in einer Umfeldkarte (manchmal auch Grid genannt) repräsentiert, die Zellen umfasst, denen Abschnitte des Umfeldes (bspw. 8 cm x 8 cm) des Fahrzeugs zugeordnet sind. Die Repräsentation erfolgt häufig durch die Angabe, mit welcher Wahrscheinlichkeit der der jeweiligen Zelle zugeordnete Abschnitt des Umfeldes von einem Hindernis belegt ist (Hinderniswahrscheinlichkeit). Aus diesem Grund wird diese Art Umfeldkarten häufig auch Belegungsgrid genannt. Aufbauend auf der Umfeldkarte können viele Fahrerassistenzsysteme wie automatische Abstandshaltung (ACC), hochautomatisiertes Fahren oder Notbremsassistenten realisiert werden. Grid-basierte Ansätze zur Umfeldmodellierung (Erstellung einer Umfeldkarte) werden immer mehr auch für Fahrerassistenzfunktionen auch im Park- und Rangierbereich eingesetzt.

Im Betrieb eines Fahrzeugs wird die Umfeldkarte entsprechend den gemessenen Abstandswerten einer entfernungsgebenden Sensorik zu Hindernissen in einer beliebigen Richtung befüllt. Die gemessenen Abstandwerte eines Sensors (z.B. Ultraschallsensor) werden unter Berücksichtigung eines der Mess-Unsicherheit entsprechend großen Hindernisbereiches in der Umfeldkarte in eine Belegungswahrscheinlichkeit von Abschnitten des Umfeldes übersetzt und für die entsprechenden Zellen bestimmt. Typischerweise ist der Hindernisbereich größer als ein einer Zelle zugeordneter Abschnitt des Umfeldes, weshalb sich der ermittelte Hindernisbereich über mehrere Abschnitte und entsprechende Zellen erstreckt. Meist werden die Belegungswahrscheinlichkeiten nicht direkt als Hinderniswahrscheinlichkeit in die Umfeldkarte eingetragen (obwohl dies auch möglich ist), sondern mit den vorhergehend bestimmten Hinderniswahrscheinlichkeiten verrechnet. Dies ermöglicht eine zeitliche Akkumulation und damit Mittelung von Messungen, was Messfehler zumindest teilweise kompensiert.

Die Eintragung der mithilfe der Messdaten eines Sensors ermittelten Belegungswahrscheinlichkeiten erfolgt hierbei unabhängig von den Messdaten anderer Sensoren voneinander. Das bedeutet, dass nach und nach die aus den Messdaten eines jeweiligen Sensors resultierenden Belegungswahrscheinlichkeiten für die Aktualisierung der Hinderniswahrscheinlichkeiten in die Umfeldkarte eingetragen werden.

Dadurch, dass die mithilfe eines Sensors ermittelten Belegungswahrscheinlichkeiten unabhängig von den Belegungswahrscheinlichkeiten, die mithilfe von Messwerten anderer Sensoren ermittelt werden, bestimmt werden und zur Aktualisierung der Hinderniswahrscheinlichkeiten der Umfeldkarte verwendet werden, ist insbesondere bei Sensoren mit geringer Querauflösung wie Ultraschallsensoren und sich überlappenden Sichtbereichen der Verlust von wichtigen Information möglich. Aufgrund der geringen Querauflösung werden in Querrichtung bzw. Azimuthrichtung für mehr Abschnitte als eigentlich der Ausdehnung des Hindernisses in Querrichtung entsprechen, Belegungen (hohe Belegungswahrscheinlichkeiten) ermittelt. Anders ausgedrückt entstehen durch diese Effekte "verlängerte" Hindernisse und andere unerwünschte Artefakte in der Umfeldkarte.

Dies ist für Fahrerassistenzfunktionen insbesondere für Park- und Rangierassistenten, die nicht nur eine Entfernungsinformation, sondern auch eine genaue Lokalisierung von Hindernissen benötigen, von Nachteil.

Die ebenfalls anhängige Anmeldung DE 10 2014 208 967 desselben Anmelders beschreibt ein System zur Umfelderfassung und Bereitstellung einer Umfeldkarte. In dieser wird insbesondere die Unterscheidung von Rampen und Hindernissen hervorgehoben. Die EP 1 731 922 A1 offenbart ein System zum Bestimmen von Freiflächen in einer Umgebung eines Fahrzeugs mithilfe von Ultraschallsensoren in einer Belegungskarte. Dabei werden beim Fusionieren Belegungswerte von Zellen verringert oder erhöht.

Die der Erfindung zugrundeliegende Aufgabe ist die Verringerung oben genannter Nachteile. Die Aufgabe wird durch ein Verfahren und eine elektronische Recheneinrichtung gemäß den unabhängigen Ansprüchen gelöst. Vorteilhafte Weiterbildungen sind in den abhängigen Ansprüchen definiert.

Ein erster Aspekt der Erfindung betrifft ein Verfahren zum Bereitstellen einer Umfeldkarte für ein Fahrzeug, wobei die Umfeldkarte Zellen umfasst, die jeweils Abschnitten des Umfeldes des Fahrzeugs zugeordnet sind und denen jeweils eine Hinderniswahrscheinlichkeit zugewiesen ist, die die Wahrscheinlichkeit repräsentiert, dass der entsprechende Abschnitt des Umfeldes mit einem Hindernis belegt ist; Wobei das Fahrzeug zumindest zwei Umfeldsensoren umfasst, die jeweils dazu ausgebildet sind, Messdaten zur Belegung eines Bereiches des Umfeldes durch ein Hindernis, Hindernisbereich genannt, in ihrem jeweiligen Erfassungsbereich bereitzustellen; wobei die Messdaten (nur) Hindernisbereiche beschreiben, die sich über mehrere Abschnitte des Umfeldes erstrecken; wobei sich die Erfassungsbereiche der Umfeldsensoren höchstens teilweise überlappen; Wobei das Verfahren umfasst: Empfangen der Messdaten von den zumindest zwei Umfeldsensoren; wobei die Messdaten eines ersten Umfeldsensors einen Hindernisbereich ausweisen; Bestimmen von Belegungswahrscheinlichkeiten für diejenigen Abschnitte des Umfeldes, die von dem ausgewiesenen Hindernisbereich der Messdaten des ersten Umfeldsensors überdeckt werden, abhängig von den Messdaten von zumindest einem weiteren der Umfeldsensoren; wobei eine Belegungswahrscheinlichkeit für einen Abschnitt die Wahrscheinlichkeit angibt, dass der entsprechende Abschnitt des Umfeldes mit einem Hindernis belegt ist; Aktualisieren der Hinderniswahrscheinlichkeit der Umfeldkarte für zumindest diejenigen Abschnitte, für die die Belegungswahrscheinlichkeit bestimmt wurde. Oft sind die Umfeldsensoren dazu ausgelegt, die Entfernung zu einem Hindernis zu erkennen, unabhängig von der Position des Hindernisses im Erfassungsbereich. Es wird also nur erkannt, dass sich ein Hindernis im Erfassungsbereich befindet und in welcher Entfernung. Nur diese Informationen (und gegebenenfalls andere Zusatzinformationen zur Verarbeitung aber nicht zur Position des Hindernisses) sind folglich in den Sensordaten eines Umfeldsensors umfasst.

Hierin wird also vorgeschlagen, beim Ermitteln der Belegungswahrscheinlichkeiten basierend auf den Messdaten eines Umfeldsensors, die Messdaten eines weiteren Umfeldsensors mit zu berücksichtigen. Abhängig von den Messdaten des weiteren Sensors werden die Belegungswahrscheinlichkeiten, mit denen die Umfeldkarte aktualisiert wird, bestimmt. Ein einfaches Beispiel hierzu ist, dass wenn die Sensormesswerte des ersten Sensors eine Belegung anzeigen, die Sensormesswerte eines benachbarten Sensors allerdings keine Belegung anzeigen, die Belegungswahrscheinlichkeit am dem benachbarten Sensor zugewandten Rand niedriger gewählt wird, als am anderen Rand.

Durch explizite Berücksichtigung von Abhängigkeiten der Sensoren untereinander bei der Eintragung in eine Umfeldkarte, kann eine genauere und artefaktfreiere Eintragung der Messwerte in die Umfeldkarte erreicht werden. Hierdurch ergeben sich weniger Störungen und eine genauere Lokalisierung von Hindernissen, was z.B. eine hindernisfreie Bahnplanung zur automatischen Fahrzeugführung auf Basis der Umfeldkarte erheblich verbessert und insbesondere in engen Rangierszenarien mit hohen Anforderungen an die Positionsgenauigkeit der Hindernisse bestimmte Fahrassistenzfunktionen erst ermöglicht.

Eine Umfeldkarte ist im Betrieb einer entsprechend eingerichteten elektronischen Recheneinheit im Wesentlichen eine Datenstruktur, die als Untereinheiten Zellen umfasst, die mit Daten zur Belegungswahrscheinlichkeit des entsprechenden Umfeldabschnittes gefüllt werden.

Belegungswahrscheinlichkeit, Hinderniswahrscheinlichkeit und der Begriff "Wahrscheinlichkeit" allgemein werden hierin als Maßzahlen für die entsprechenden Wahrscheinlichkeiten verstanden und nicht unbedingt als die korrekt ermittelte Wahrscheinlichkeit selbst.

Ein Hindernis bedeutet die Anwesenheit eines lebenden oder nicht lebenden Objektes durch den der durch das Objekt belegte Bereich des Umfeldes nicht befahrbar ist.

Falls die Sensordaten der zwei Umfeldsensoren darauf hindeuten, dass ein Sensor ein Objekt erfasst, der andere aber nicht, werden für zumindest zwei unterschiedliche überdeckte Abschnitte unterschiedliche Belegungswahrscheinlichkeiten bestimmt.

Die Belegungswahrscheinlichkeit der Abschnitte der Hindernisbelegung kann gemäß einer linearen oder jeder anderen beliebigen stetigen oder unstetigen Funktion bestimmt werden, wobei die Randbedingungen der Funktion durch die Sensordaten des betrachteten Umfeldsensors und der benachbarten Umfeldsensoren vorgegeben sind. Dabei kann vorgesehen sein, dass nur die Erfassung der Anwesenheit oder Abwesenheit eines Hindernisses im jeweiligen Erfassungsbereich des Sensors von Bedeutung zur Bestimmung der Randbedingungen ist. Die Randbedingungen können festlegen, welche überdeckten Abschnitte welche Belegungswahrscheinlichkeit zugewiesen bekommen.

Beispielsweise können die Randbedingungen so bestimmt werden, dass sofern die betrachten Sensordaten ein Hindernis anzeigen, die Sensordaten des weiteren Umfeldsensors allerdings nicht, die Belegungswahrscheinlichkeit des Abschnitts, der dem Erfassungsbereich des weiteren Umfeldsensors am entferntesten ist auf einen vorbestimmten Maximalwert gesetzt wird und die Belegungswahrscheinlichkeit des Abschnitts, der dem Erfassungsbereich des weiteren Umfeldsensors am nächsten ist, auf einen weiteren vorbestimmten Minimalwert gesetzt wird. Die Belegungswahrscheinlichkeiten der dazwischenliegenden Abschnitte werden gemäß einer linearen Funktion ermittelt.

Wobei die Belegungswahrscheinlichkeit der von der Hindernisbelegung überdeckten Abschnitte gemäß einer linearen oder jeder anderen beliebigen stetigen oder unstetigen Funktion außer einer Konstante bestimmt werden, wobei die Funktion durch die Sensordaten des betrachteten Umfeldsensors und des zumindest einen weiteren Umfeldsensors vorgegeben wird. Die Funktion kann in einer vorbestimmten (Look-up) Tabelle abgelegt sein und gegebenenfalls Belegungswahrscheinlichkeiten für alle überdeckten Abschnitte vorgeben. Zur Vorgabe der Funktion kann darauf abgestellt werden, ob die Sensordaten der Umfeldsensoren die An- oder Abwesenheit eines Hindernisses anzeigen. Auf diese Weise kann eine ähnliche Funktion erreicht werden, wie durch die Verwendung von Randbedingungen und das vorgenannte Beispiel kann ebenfalls verwirklicht werden.

Bei der Bestimmung der Belegungswahrscheinlichkeiten wird typischerweise berücksichtigt, in welchem räumlichen Verhältnis die Erfassungsbereiche des ersten Umfeldsensors und des zumindest einen weiteren Umfeldsensors stehen. Sind die Erfassungsbereiche der Umfeldsensoren nicht angrenzend oder überlappend (ggf. mit 0,3 m, 0,5 m oder mehr Freiraum zwischen den Erfassungsbereichen) so kann der Einfluss des Sensordaten des weiteren Umfeldsensors auf die Belegungswahrscheinlichkeiten der überdeckten Abschnitte geringer sein, als wenn die Erfassungsbereiche der Umfeldsensoren aneinander angrenzen oder sich überlappen.

In einer Implementierung umfasst das Fahrzeug zumindest drei Umfeldsensoren, deren Erfassungsbereiche nebeneinander und jeweils benachbart sind und höchstens jeweils teilweise überlappen; wobei das Verfahren umfasst: Empfangen der Messdaten von den zumindest drei Umfeldsensoren; wobei die Messdaten des mittleren Umfeldsensors einen Hindernisbereich ausweisen; Bestimmen der Belegungswahrscheinlichkeit für diejenigen Abschnitte des Umfeldes, die von dem ausgewiesenen Hindernisbereich der Messdaten des mittleren Umfeldsensors überdeckt werden, abhängig von den Messdaten von den beiden benachbarten Umfeldsensoren. Dabei kann die Bestimmung der Belegungswahrscheinlichkeit abhängig davon durchgeführt werden, ob die Messdaten nur eines benachbarten Umfeldsensors einen Hindernisbereich ausweisen oder beide benachbarten Umfeldsensoren.

Hierin ist somit die Bestimmung der Belegungswahrscheinlichkeiten der überdeckten Abschnitte von zwei Nachbarsensoren abhängig. Es kann vorgesehen sein, dass die Belegungswahrscheinlichkeit der überdeckten mittleren Abschnitte (die zumindest nicht an die beiden benachbarten Erfassungsbereiche angrenzen oder einen Mindestabstand davon entfernet sind) durch die Erfassung des Hindernisses durch den mittleren Sensor bestimmt werden. Die Belegungswahrscheinlichkeiten der Randabschnitte (nicht der mittleren Abschnitte) können dann durch die erkannte An- oder Abwesenheit eines Hindernisses in den benachbarten Erfassungsbereichen bestimmt werden. Beispielsweise kann abhängig von der erkannten An- oder Abwesenheit eines Hindernisses die Funktion für die Belegungswahrscheinlichkeit gewählt werden. In einer Ausführungsform kann dies bedeuten, dass wenn die Sensordaten von beiden benachbarten Umfeldsensoren jeweils keinen Hindernisbereich ausweisen, für die Belegungswahrscheinlichkeit eines oder mehrerer überdeckter Abschnitte, die nicht am Rand des Hindernisbereiches liegen, die höchste Belegungswahrscheinlichkeit der überdeckten Abschnitte bestimmt wird.

In einer typischen Implementierung werden beim Aktualisieren der Hinderniswahrscheinlichkeit die bisher in der Umfeldkarte gespeicherten Hinderniswahrscheinlichkeiten mit den Belegungswahrscheinlichkeiten ergänzt, insbesondere werden für einen Abschnitt dessen gespeicherte Hinderniswahrscheinlichkeit und Belegungswahrscheinlichkeit verrechnet. Die Verrechnung kann die Summierung des Logarithmus der Belegungswahrscheinlichkeit und/oder des Logarithmus der Hinderniswahrscheinlichkeit umfassen, manchmal "LogOdds" genannt. Bei der Hinderniswahrscheinlichkeit handelt sich somit um eine Filterung der Belegungswahrscheinlichkeiten über der Zeit, die die Korrektur von Messfehlern ermöglicht. Umgekehrt können die vorstehend genannten Verfahren auch derart ausgeführt werden, dass die Hinderniswahrscheinlichkeit auf die Belegungswahrscheinlichkeit gesetzt wird. Dabei wird also keine Filterung durchgeführt.

Ein anderer Aspekt der Erfindung betrifft eine elektronische Recheneinrichtung für Fahrzeuge, wobei die elektronische Recheneinrichtung zur Ausführung eines der vorstehenden erläuterten Verfahren eingerichtet ist. Die elektronische Recheneinrichtung kann ein Mikrocontroller, typischer Desktoprechner, anwendungsspezifischer Schaltkreis oder ein allgemeiner Computer sein.

### KURZE BESCHREIBUNG DER ZEICHNUNGEN

Fig. 1a und 1b zeigen symbolisch die Verarbeitung von Sensordaten gemäß einem Ausführungsbeispiel.
Fig. 2a und 2b zeigen symbolisch die Verarbeitung von Sensordaten gemäß einem weiteren Ausführungsbeispiel.
Fig. 3a und 3b zeigen symbolisch die Verarbeitung von Sensordaten gemäß einem dritten Ausführungsbeispiel.

Gleiche Bezugszeichen beziehen sich auf sich entsprechende Elemente über die Figuren hinweg.

### DETAILLIERTE BESCHREIBUNG DER AUSFÜHRUNGSBEISPIELE

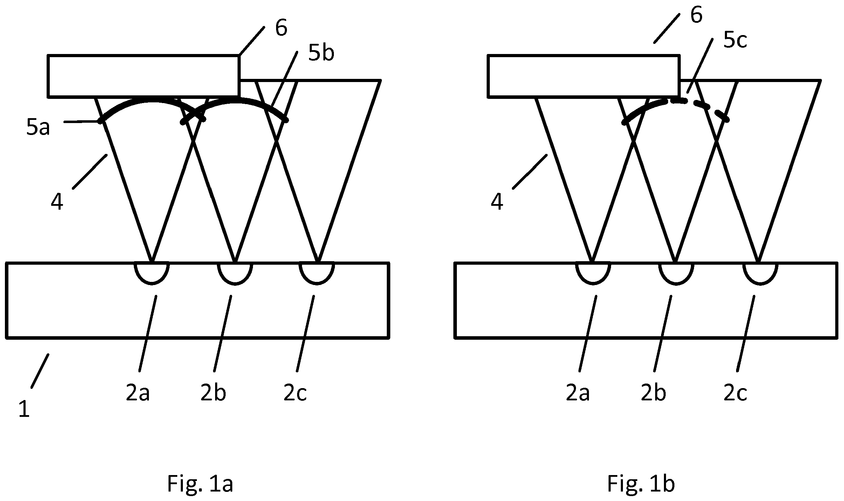

Fig. 1a zeigt symbolisch die Erfassung von Hindernissen mit Ultraschallsensoren gemäß einem Ausführungsbeispiel. In der Karosserie 1 eines Fahrzeugs sind Ultraschallsensoren 2a, 2b und 2c benachbart eingelassen. Diese liegen nebeneinander und weisen jeweils einen Erfassungsbereich 4 auf. Der Erfassungsbereich weist einen Öffnungswinkel von ca. 50° auf und die Erfassungsbereiche der Sensoren überlappen. Innerhalb dieses Erfassungsbereiches können die Sensoren 2a und 2b die Entfernung zu einem Hindernis 6 feststellen, allerdings nicht, in welchem Winkel sich das Hindernis zum Sensor befindet (Azimuth). Aus diesem Grund wird einer erfassten Entfernung ein Hindernisbereich 5a, 5b zugewiesen. Die Sensordaten von beiden Sensoren 2a und 2b weisen auf ein Hindernis hin. Die Sensordaten von Sensor 2c weisen auf die Abwesenheit eines Hindernisses hin. Beim Erstellen der Umfeldkarte wird jeder Sensor nacheinander abgefragt und die empfangenen Sensordaten werden in Belegungswahrscheinlichkeiten verarbeitet, um schließlich die Hinderniswahrscheinlichkeiten für die Umfeldkarte zu ermitteln. In Fig. 1a, 1b, 2a, 2b, 3a und 3b soll jeweils die Belegungswahrscheinlichkeit für den Sensor 2b ermittelt werden (betrachteter Sensor). Dabei bedeutet eine Belegungswahrscheinlichkeit von p>0,5, eine vermutliche Belegung. Eine Wahrscheinlichkeit von p=0,5 bedeutet, dass die Zelle zu 50% belegt ist und zu 50% unbelegt, also Zustand "unbekannt". Eine Belegungswahrscheinlichkeit von p<0,5 bedeutet, eine vermutliche Nicht-Belegung (Abwesenheit eines Hindernisses).

Fig. 1b zeigt symbolisch, welche Belegungswahrscheinlichkeit für den Sensor 2b errechnet wird gemäß dem Ausführungsbeispiel. Im Betrieb wird erkannt, dass die letzten Sensordaten des Sensors 2a und 2b die Anwesenheit eines Hindernisses anzeigen und die Sensordaten des Sensors 2c auf die Abwesenheit eines Hindernisses hinweisen. Anhand einer vorgespeicherten Tabelle werden die Belegungswahrscheinlichkeiten für die überdeckten Abschnitte ermittelt. Die Tabelle enthält einen Eintrag für den in Fig. 1a betrachteten Fall der erkannten An- und Abwesenheiten von Hindernissen. Die Funktion, wie die Belegungswahrscheinlichkeiten den Abschnitten zuzuweisen ist, ist in der Tabelle mit der Speicherung von numerischen Werten für jeden Abschnitt realisiert. Die Abschnitte in der Tabelle werden dabei relativ zueinander angegeben und die Übertragung auf die Umfeldkarte erfolgt über die absolute Positionierung mittels der gemessenen Entfernung.

Im vorliegenden Fall sehen die gespeicherten Belegungswahrscheinlichkeiten eine Zweiteilung vor. In der Hälfte der Abschnitte, die dem Erfassungsbereich des Sensors 2a zugeordnet sind, wird eine erste Belegungswahrscheinlichkeit gesetzt, beispielsweise 0,8 (durchgezogene Linie in Fig. 1b). In der anderen Hälfte (die dem Sensor 2c zugewandt ist) wird eine zweite Belegungswahrscheinlichkeit gesetzt (beispielsweise 0,6), wobei die zweite Belegungswahrscheinlichkeit kleiner ist, als die erste Belegungswahrscheinlichkeit (gestrichelte Linie in Fig. 1b). Generell können die Abstufungen der Belegungswahrscheinlichkeiten auch wesentlich feiner sein, so dass drei, vier oder fünf Stufen vorgesehen sind, es kann für jeden Abschnitt eine eigene Belegungswahrscheinlichkeit vorgesehen sein.

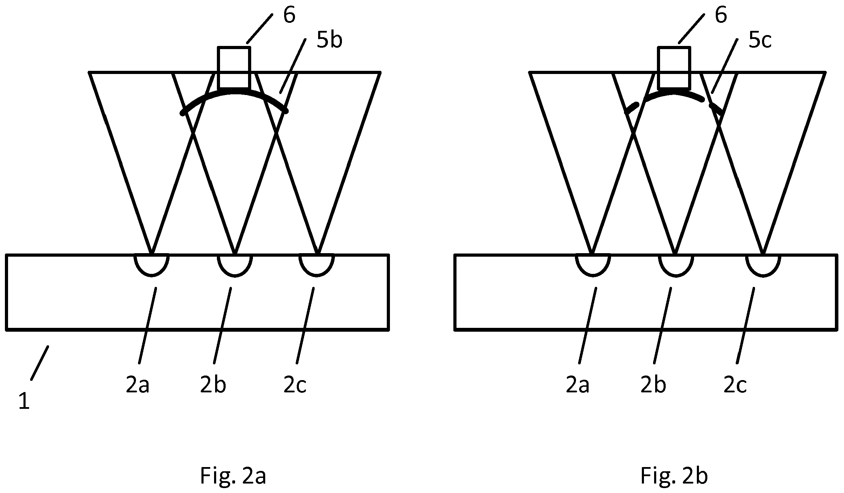

Fig. 2a und 2b zeigen den Fall, dass ein Hindernis 6 nur im Erfassungsbereich des Sensors 2b liegt. Anhand der erkannten An- und Abwesenheiten der Sensoren werden für diesen Fall in der Tabelle gespeicherte Belegungswahrscheinlichkeiten für die überdeckten Abschnitte ausgewählt. Hier wird den mittigen Abschnitten (durchgezogene Linie) die höhere Belegungswahrscheinlichkeit zugewiesen und den Abschnitten am Rand jeweils die niedrigere Belegungswahrscheinlichkeit (gestrichelte Linie).

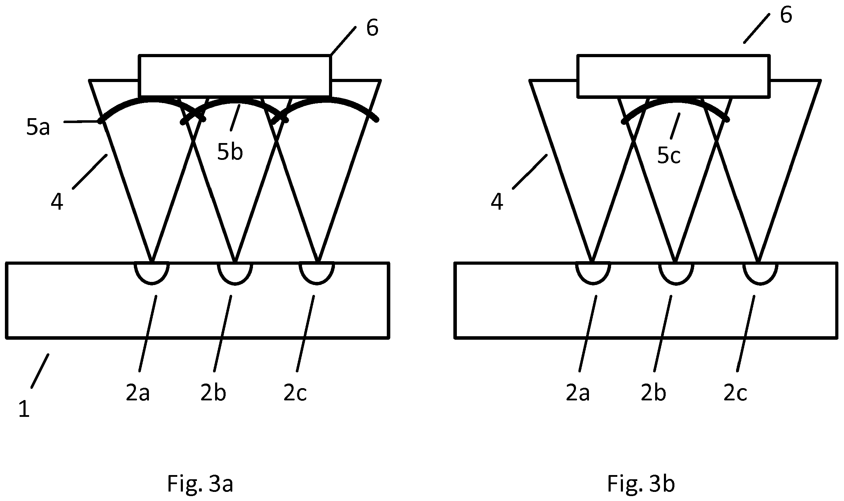

Fig. 3a und 3b zeigen den Fall, dass ein Hindernis 6 von allen drei Sensoren erkannt wird. Wiederum werden anhand der erkannten An- und Abwesenheiten der Sensoren für diesen Fall in der Tabelle gespeicherte Belegungswahrscheinlichkeiten für die überdeckten Abschnitte ausgewählt. Hier wird allen Abschnitten (durchgezogene Linie) die höhere Belegungswahrscheinlichkeit zugewiesen.

## Patentansprüche

1. Verfahren zum Bereitstellen einer Umfeldkarte für ein Fahrzeug, wobei die Umfeldkarte Zellen umfasst, die jeweils Abschnitten des Umfeldes des Fahrzeugs zugeordnet sind und denen jeweils eine Hinderniswahrscheinlichkeit zugewiesen ist, die die Wahrscheinlichkeit repräsentiert, dass der entsprechende Abschnitt des Umfeldes mit einem Hindernis belegt ist;
Wobei das Fahrzeug zumindest zwei Umfeldsensoren (2a, 2b, 2c) umfasst, die jeweils dazu ausgebildet sind, Messdaten zur Belegung eines Bereiches des Umfeldes durch ein Hindernis (6), Hindernisbereich genannt, in ihrem jeweiligen Erfassungsbereich (4) bereitzustellen; wobei die Messdaten Hindernisbereiche beschreiben, die sich über mehrere Abschnitte des Umfeldes erstrecken; wobei sich die Erfassungsbereiche der Umfeldsensoren (2a, 2b, 2c) höchstens teilweise überlappen;
Wobei das Verfahren umfasst:
Empfangen der Messdaten von den zumindest zwei Umfeldsensoren (2a, 2b, 2c); wobei die Messdaten eines ersten Umfeldsensors (2a, 2b, 2c) einen Hindernisbereich ausweisen;
Bestimmen von Belegungswahrscheinlichkeiten für diejenigen Abschnitte des Umfeldes, die von dem ausgewiesenen Hindernisbereich der Messdaten des ersten Umfeldsensors (2a, 2b, 2c) überdeckt werden, abhängig von den Messdaten von zumindest einem weiteren der Umfeldsensoren (2a, 2b, 2c);
wobei eine Belegungswahrscheinlichkeit für einen Abschnitt die Wahrscheinlichkeit angibt, dass der entsprechende Abschnitt des Umfeldes mit einem Hindernis (6) belegt ist;
Aktualisieren der Hinderniswahrscheinlichkeit der Umfeldkarte für zumindest diejenigen Abschnitte, für die die Belegungswahrscheinlichkeit bestimmt wurde;
**dadurch gekennzeichnet, dass**
die Belegungswahrscheinlichkeit für einen überdeckten Abschnitt, der sich in einer ersten Entfernung vom Erfassungsbereich (4) des weiteren Sensors (2a, 2b, 2c) befindet, stärker von den Messdaten des weiteren Sensors (2a, 2b, 2c) abhängt, als die Belegungswahrscheinlichkeit für einen überdeckten Abschnitt, der sich in einer größeren Entfernung als die erste Entfernung vom Erfassungsbereich (4) des weiteren Sensors befindet.

2. Verfahren nach Anspruch 1, wobei für zumindest zwei unterschiedliche überdeckte Abschnitte unterschiedliche Belegungswahrscheinlichkeiten bestimmt werden.

3. Verfahren nach einem der vorhergehenden Ansprüche, wobei die Belegungswahrscheinlichkeit der von der Hindernisbelegung überdeckten Abschnitte gemäß einer linearen oder jeder anderen beliebigen stetigen oder unstetigen Funktion außer einer Konstante bestimmt werden, wobei die Funktion durch die Sensordaten des betrachteten Umfeldsensors (2a, 2b, 2c) und des zumindest einen weiteren Umfeldsensors (2a, 2b, 2c) vorgegeben wird.

4. Verfahren nach einem der vorhergehenden Ansprüche, wobei bei der Bestimmung der Belegungswahrscheinlichkeiten berücksichtigt wird, in welchem räumlichen Verhältnis die Erfassungsbereiche des ersten Umfeldsensors (2a, 2b, 2c) und des zumindest einen weiteren Umfeldsensors (2a, 2b, 2c) stehen.

5. Verfahren nach Anspruch 1, wobei die Messdaten des weiteren Sensors (2a, 2b, 2c) keinen Hindernisbereich ausweisen;
Wobei die Belegungswahrscheinlichkeit für einen überdeckten Abschnitt, der sich in einer ersten Entfernung vom Erfassungsbereich (4) des weiteren Sensors (2a, 2b, 2c) befindet, auf einen niedrigeren Wert bestimmt wird, als die Belegungswahrscheinlichkeit für einen überdeckten Abschnitt, der sich in einer größeren Entfernung als die erste Entfernung vom Erfassungsbereich (4) des weiteren Sensors (2a, 2b, 2c) befindet.

6. Verfahren nach einem der vorhergehenden Ansprüche, wobei das Fahrzeug zumindest drei Umfeldsensoren (2a, 2b, 2c) umfasst, deren Erfassungsbereiche (4) nebeneinander und jeweils benachbart sind und höchstens jeweils teilweise überlappen; wobei das Verfahren umfasst:
Empfangen der Messdaten von den zumindest drei Umfeldsensoren (2a, 2b, 2c); wobei die Messdaten des mittleren Umfeldsensors (2b) einen Hindernisbereich ausweisen;
Bestimmen der Belegungswahrscheinlichkeit für diejenigen Abschnitte des Umfeldes, die von dem ausgewiesenen Hindernisbereich der Messdaten des mittleren Umfeldsensors (2b) überdeckt werden, abhängig von den Messdaten von den beiden benachbarten Umfeldsensoren (2a, 2c).

7. Verfahren nach Anspruch 6, wobei die Bestimmung der Belegungswahrscheinlichkeit abhängig davon durchgeführt wird, ob die Messdaten nur eines benachbarten Umfeldsensors (2a, 2b, 2c) einen Hindernisbereich ausweisen oder beide benachbarten Umfeldsensoren (2a, 2b, 2c).

8. Verfahren nach Anspruch 7, wobei, wenn die Sensordaten von beiden benachbarten Umfeldsensoren (2a, 2b, 2c) jeweils keinen Hindernisbereich ausweisen, für die Belegungswahrscheinlichkeit eines oder mehrerer überdeckter Abschnitte, die nicht am Rand des Hindernisbereiches liegen, die höchste Belegungswahrscheinlichkeit der überdeckten Abschnitte bestimmt wird.

9. Verfahren nach einem der vorhergehenden Ansprüche, wobei die Messdaten die Entfernung eines Hindernisses vom jeweiligen Umfeldsensor (2a, 2b, 2c) bereitstellen; wobei die Messdaten keine Information über die Ausdehnung des Hindernisses im Erfassungsbereich (4) bereitstellen.

10. Verfahren nach Anspruch 9, wobei die Umfeldsensoren (2a, 2b, 2c) Ultraschallsensoren sind.

11. Verfahren nach einem der vorhergehenden Ansprüche, wobei beim Aktualisieren der Hinderniswahrscheinlichkeit die bisher in der Umfeldkarte gespeicherten Hinderniswahrscheinlichkeiten mit den Belegungswahrscheinlichkeiten ergänzt werden, insbesondere werden für einen Abschnitt dessen gespeicherte Hinderniswahrscheinlichkeit und Belegungswahrscheinlichkeit verrechnet.

12. Elektronische Recheneinrichtung für Fahrzeuge, die zumindest zwei Umfeldsensoren (2a, 2b, 2c) umfassen, die jeweils dazu ausgebildet sind, Messdaten zur Belegung eines Bereiches des Umfeldes durch ein Hindernis (6), Hindernisbereich genannt, in ihrem jeweiligen Erfassungsbereich (4) bereitzustellen; wobei die Messdaten Hindernisbereiche beschreiben, die sich über mehrere Abschnitte des Umfeldes erstrecken; wobei sich die Erfassungsbereiche der Umfeldsensoren (2a, 2b, 2c) höchstens teilweise überlappen; wobei die elektronische Recheneinrichtung zur Ausführung eines Verfahrens nach einem der Ansprüche 1 bis 11 eingerichtet ist.

## Claims

1. A method for providing an environmental map for a vehicle, wherein the environmental map comprises cells, each of which is assigned to portions of the environment of the vehicle and each of which is assigned an obstacle probability that represents the probability that the corresponding portion of the environment is occupied by an obstacle;
wherein the vehicle comprises at least two environmental sensors (2a, 2b, 2c), each of which is designed to provide measurement data regarding the occupancy of a region of the environment by an obstacle (6), referred to as an obstacle region, in the corresponding detection region (4) of the sensor; wherein the measurement data describe obstacle regions which extend over multiple portions of the environment; wherein the detection regions of the environmental sensors (2a, 2b, 2c) at most partly overlap;
wherein the method comprises the following steps:
receiving the measurement data from the at least two environmental sensors (2a, 2b, 2c); wherein the measurement data of a first environmental sensor (2a, 2b, 2c) identify an obstacle region;
determining occupancy probabilities for those portions of the environment that are covered by the identified obstacle region of the measurement data of the first environmental sensor (2a, 2b, 2c), depending on the measurement data from at least a further one of the environmental field sensors (2a, 2b, 2c);
wherein an occupancy probability for a portion indicates the probability that the corresponding portion of the environment is occupied by an obstacle (6);
updating the obstacle probability of the environmental map for at least those portions for which the occupancy probability has been determined;
**characterised in that**
the occupancy probability for a covered portion which is at a first distance from the detection region (4) of the further sensor (2a, 2b, 2c) is more heavily dependent on the measurement data of the further sensor (2a, 2b, 2c) than the occupancy probability for a covered portion which is at a greater distance than the first distance from the detection region (4) of the further sensor.

2. A method according to claim 1, wherein different occupancy probabilities are determined for at least two different covered portions.

3. A method according to either one of the preceding claims, wherein the occupancy probability of the portions covered by the obstacle occupancy are determined in accordance with a linear or any other arbitrary continuous or discontinuous function except for a constant, wherein the function is specified by the sensor data of the considered environmental sensor (2a, 2b, 2c) and the at least one further environmental sensor (2a, 2b, 2c).

4. A method according to any one of the preceding claims, wherein when determining the occupancy probabilities the spatial relationship between the detection regions of the first environmental sensor (2a, 2b, 2c) and of the at least one further environmental sensor (2a, 2b, 2c) is taken into consideration.

5. A method according to claim 1, wherein the measurement data of the further sensor (2a, 2b, 2c) does not identify an obstacle region;
wherein the occupancy probability for a covered portion located at a first distance from the detection region (4) of the further sensor (2a, 2b, 2c) is determined at a lower value than the occupancy probability for a covered portion located at a greater distance than the first distance from the detection region (4) of the further sensor (2a, 2b, 2c).

6. A method according to any one of the preceding claims, wherein the vehicle comprises at least three environmental sensors (2a, 2b, 2c), the detection regions (4) of which are arranged side by side and adjacently and at most partly overlap; wherein the method comprises:
receiving the measurement data from the at least three environmental sensors (2a, 2b, 2c); wherein the measurement data of the middle environmental sensor (2b) identify an obstacle region;
determining the occupancy probability for those portions of the environment which are covered by the identified obstacle region of the measurement data of the middle environmental sensor (2b) depending on the measurement data of the two adjacent environmental sensors (2a, 2c).

7. A method according to claim 6, wherein the determination of the occupancy probability is performed depending on whether the measurement data of just one adjacent environmental sensor (2a, 2b, 2c) identify an obstacle region, or both adjacent environmental sensors (2a, 2b, 2c).

8. A method according to claim 7, wherein if none of the sensor data from either of the adjacent environmental sensors (2a, 2b, 2c) identifies an obstacle region, the highest occupancy probability of the covered portions is determined for the occupancy probability of one or more covered portions not located at the edge of the obstacle region.

9. A method according to any one of the preceding claims, wherein the measurement data provide the distance of an obstacle from the corresponding environmental sensor (2a, 2b, 2c); wherein the measurement data do not provide any information regarding the extent of the obstacle in the detection region (4).

10. A method according to claim 9, wherein the environmental sensors (2a, 2b, 2c) are ultrasound sensors.

11. A method according to any one of the preceding claims, wherein, when updating the obstacle probability, the obstacle probabilities stored previously in the environmental map are supplemented with the occupancy probabilities, more especially the obstacle probability and occupancy probability stored for a portion are recalculated for the said portion.

12. An electronic computing device for vehicles which comprise at least two environmental sensors (2a, 2b, 2c), which are each designed to provide measurement data regarding the occupancy of a region of the environment by an obstacle (6), referred to as an obstacle region, in the corresponding detection region (4) of the sensor; wherein the measurement data describe obstacle regions which extend over multiple portions of the environment; wherein the detection regions of the environmental sensors (2a, 2b, 2c) at most partly overlap; wherein the electronic computing device is designed to carry out a method according to any one of claims 1 to 11.

## Revendications

1. Procédé permettant de fournir une carte de l'environnement d'un véhicule, cette carte de l'environnement comprenant des cellules qui sont respectivement associées à des parties de l'environnement du véhicule, et, auxquelles est respectivement attribuée une probabilité d'obstacle qui représente la probabilité que la partie correspondante de l'environnement soit occupée par un obstacle, le véhicule comprenant au moins deux capteurs d'environnement (2a, 2b, 2c) qui sont respectivement réalisés pour fournir des données de mesure concernant l'occupation d'une zone de l'environnement par un obstacle (6), nommée zone d'obstacle dans leur zone de détection respective (4), les données de mesure décrivant des zones d'obstacle qui s'étendent sur plusieurs partie de l'environnement, les zones de détection des capteurs d'environnement (2a, 2b, 2c) se chevauchant au plus partiellement,
ce procédé comprenant des étapes consistant à :
recevoir les données de mesure des capteurs d'environnement (2a, 2b, 2c), les données de mesure d'un premier capteur d'environnement (2a, 2b, 2c) identifiant une zone d'obstacle,
déterminer des probabilités d'occupation pour les parties de l'environnement qui sont couvertes par la zone d'obstacle identifié des données de mesure du premier capteur d'environnement (2a, 2b, 2c) en fonction des données de mesure d'au moins un autre capteur d'environnement (2a, 2b, 2c),
une probabilité d'occupation pour une partie indiquant la probabilité que cette partie de l'environnement soit occupée par un obstacle (6),
actualiser la probabilité d'obstacle de la carte d'environnement pour au moins les parties pour lesquelles la probabilité d'occupation a été déterminée,
**caractérisé en ce que**
la probabilité d'occupation pour une partie couverte qui se trouve à une première distance de la zone de détection (4) de l'autre capteur (2a, 2b, 2c) dépend plus fortement des données de mesure de l'autre capteur (2a, 2b, 2c) que la probabilité d'occupation pour une partie couverte qui se trouve à une distance supérieure à la première distance de la zone de détection (4) de l'autre capteur.

2. Procédé conforme à la revendication 1,
selon lequel pour au moins deux parties couvertes différentes des probabilités d'occupation différentes sont déterminées.

3. Procédé conforme à l'une des revendications précédentes,
selon lequel la probabilité d'occupation des parties couvertes par l'occupation d'obstacle est déterminée conformément à une fonction linéaire ou une fonction continue ou discontinue autre quelconque à l'exception d'une constante, cette fonction étant prédéfinie par les données du capteur d'environnement (2a, 2b, 2c) considéré et de l'autre capteur d'environnement (2a, 2b, 2c).

4. Procédé conforme à l'une des revendications précédentes,
selon lequel lors de la détermination des probabilités d'occupation on prend en considération les rapports spatiaux des zones de détection du premier capteur d'environnement (2a, 2b, 2c) et de l'autre capteur d'environnement (2a, 2b, 2c).

5. Procédé conforme à la revendication 1,
selon lequel les données de mesure de l'autre capteur (2a, 2b, 2c) n'identifient pas de zone d'obstacle,
la probabilité d'occupation pour une partie couverte qui est située à une première distance de la zone de détection (4) de l'autre capteur (2a, 2b, 2c) étant déterminée à une valeur plus faible que la probabilité d'occupation pour une partie couverte qui est située à une distance supérieure à la première distance de la zone de détection (4) de l'autre capteur (2a, 2b, 2c).

6. Procédé conforme à l'une des revendications précédentes,
selon lequel le véhicule comporte au moins trois capteurs d'environnement (2a, 2b, 2c) dont les zones de détection (4) sont situées côte à côte, sont respectivement voisines, et se chevauchent au plus partiellement, le procédé comprenant des étapes consistant à :
recevoir les données de mesure des trois capteurs d'environnement (2a, 2b, 2c), les données de mesure du capteur d'environnement central (2b) identifiant une zone d'obstacle,
déterminer la probabilité d'occupation pour les parties de l'environnement qui sont couvertes par la zone d'obstacle identifié des données de mesure du capteur d'environnement central (2b) en fonction des données de mesure des deux capteurs d'environnement voisins (2a, 2c).

7. Procédé conforme à la revendication 6,
selon lequel la détermination de la probabilité d'occupation est effectuée en fonction du fait que les données de mesure d'un seul capteur d'environnement voisin (2a, 2b, 2c) ou des deux capteurs d'environnement voisins (2a, 2b, 2c) identifient une zone d'obstacle.

8. Procédé conforme à la revendication 7,
selon lequel lorsque les données de capteur des deux capteurs d'environnement (2a, 2b, 2c) voisins n'identifient pas de zone d'obstacle, pour déterminer la probabilité d'occupation d'une ou de plusieurs partie(s) couverte(s), qui ne sont pas situés au bord de la zone d'obstacle, on détermine la probabilité d'occupation la plus élevée des parties couvertes.

9. Procédé conforme à l'une des revendications précédentes,
selon lequel les données de mesure fournissent la distance d'un obstacle à un capteur d'environnement (2a, 2b, 2c) respectif, les données de mesure ne fournissant aucune information concernant l'étendue de l'obstacle dans la zone de détection (4).

10. Procédé conforme à la revendication 9,
selon lequel les capteurs d'environnement (2a, 2b, 2c) sont des capteurs à ultrasons.

11. Procédé conforme à l'une des revendications précédentes,
selon lequel lors d'une actualisation de la probabilité d'obstacle, les probabilités d'obstacle enregistrées auparavant dans la carte d'environnement sont complétées par les probabilités d'occupation et en particulier pour une partie sa probabilité d'obstacle et sa probabilité d'occupation enregistrées sont comptées.

12. Dispositif de calcul électronique pour des véhicules qui comportent au moins deux capteurs d'environnement (2a, 2b, 2c) qui sont respectivement réalisés pour fournir des données de mesure concernant l'occupation d'une zone de l'environnement par un obstacle (6), nommée zone d'obstacle, dans leur zone de détection (4) respective, les données de mesure décrivant des zones d'obstacle qui s'étendent sur plusieurs parties de l'environnement, les zones de détection des capteurs d'environnement (2a, 2b, 2c) se chevauchant au plus partiellement, ce dispositif de calcul électronique étant susceptible de mettre en oeuvre un procédé conforme à l'une des revendications 1 à 11.
